(19) Europäisches Patentamt
European Patent Office
Office européen des brevets

(11) Veröffentlichungsnummer : **0 019 906**
**B1**

(12) # EUROPÄISCHE PATENTSCHRIFT

(45) Veröffentlichungstag der Patentschrift : **17.10.84**

(21) Anmeldenummer : **80102957.0**

(22) Anmeldetag : **28.05.80**

(51) Int. Cl.$^3$ : **C 08 G 18/32**, C 08 G 18/38, C 08 G 59/50, C 08 K 5/34, C 08 G 18/64

(54) **Unter dem Einfluss von Luftfeuchtigkeit ausgehärtet werdendes Gemisch und ein Verfahren zur Herstellung von Polyisocyanat-Polyadditionsprodukten oder vernetzten Polyepoxiden.**

(30) Priorität : **31.05.79 DE 2922176**

(43) Veröffentlichungstag der Anmeldung : **10.12.80 Patentblatt 80/25**

(45) Bekanntmachung des Hinweises auf die Patenterteilung : **17.10.84 Patentblatt 84/42**

(84) Benannte Vertragsstaaten : **BE FR GB IT NL SE**

(56) Entgegenhaltungen :
**DE-A- 2 259 980**
**DE-A- 2 739 313**

(73) Patentinhaber : **AKZO N.V.**
**Velperweg 76**
**NL-6824 BM Arnhem (NL)**

(72) Erfinder : **Zengel, Hans-Georg, Dr. Dipl.-Chem.**
**Nordring 6**
**D-8751 Kleinwallstadt (DE)**
Erfinder : **Wallrabenstein, Michael, Dr. Dipl.-Chem.**
**Kurmainzerstrasse 23**
**D-8761 Wörth am Main (DE)**
Erfinder : **Brodowski, Walter, Dr. Dipl.-Chem.**
**Neudorferstrasse 8**
**D-8762 Amorbach (DE)**

(74) Vertreter : **von Wussow, Joachim, Dr.**
**Akzo GmbH Kasinostrasse 19-23**
**D-5600 Wuppertal 1 (DE)**

**EP 0 019 906 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein unter dem Einfluß von Luftfeuchtigkeit ausgehärtet werdendes Gemisch und ein Verfahren zur Herstellung von Polyisocyanat-Polyadditionsprodukten oder vernetzten Polyepoxiden.

Nach der DE-OS 2 018 233 sind Zubereitungen bekannt, welche ein Oxazolidin und ein polyfunktionelles Isocyanat enthalten und in Gegenwart von Wasser aushärten, um zähe, chemisch widerstandsfähige polymere Materialien zu ergeben.

In der DE-OS 2 718 100 wird ein Verfahren zur Herstellung von Polyisocyanat-Polyadditionsprodukten durch Umsetzung von organischen Polyisocyanaten mit unter dem hydrolytischen Einfluß von Wasser organische Diamine abspaltenden Verbindungen beschrieben. Als organische Diamine abspaltende Verbindungen werden hierin polycyclische Kondensationsprodukte des Formaldehyds mit aliphatischen oder cycloaliphatischen diprimären 1,2-Diaminen verwendet.

In der DT-OS 2 739 313 werden als Feuchtigkeitshärter für Kunststoffvorläufer N,N'-substituierte Imidazolidinderivate oder Hexahydropyrimidinderivate vorgeschlagen, die durch mehrstündige Umsetzung von definierten und in jedem Fall an einem N-Atom ein H-Atom aufweisenden Cycloaminalen mit einem Polyisocyanat in einem Äquivalenzverhältnis von 1 : 1 synthetisiert werden. Der Einsatz derartiger Verbindungen für den genannten Zweck erfordert also nicht nur eine zusätzliche Synthesestufe, sondern auch eine doppelte Menge an Polyisocyanaten, da bei der Synthese dieser Verbindungen praktisch genauso viel Polyisocyanat verbraucht wird wie bei der späteren Anwendung der Verbindungen als Feuchtigkeitshärter. Insbesondere hat sich bei einer Nacharbeitung dieser DE-OS herausgestellt, daß die dort als Feuchtigkeitshärter vorgeschlagenen Cycloaminale eine für technische Anwendungszwecke zu geringe Hydrolysengeschwindigkeit besitzen.

Aus der US-PS 3 787 416 ist es bekannt, N-hydroxyalkyl-N'-hydrocarbylhexahydropyrimidine oder N-alkoxyalkyl-N'-hydrocarbyl-hexahydropyrimidine, in denen der Hydrocarbylrest ein sekundäres Alkyl oder ein Cycloalky ist, als Härtungskatalysator bei der Polyurethan- und Epoxyharzherstellung zu verwenden. Diese Verbindungen werden in den für Katalysatoren üblichen minimalen Mengen von 0,1 bis 1 %, bezogen auf das Reaktionsgemisch, angewendet. Derartige katalytische Gewichtsmengen sind ungeeignet, mit Polyepoxiden oder Polyisocyanaten unter dem Einfluß von Luftfeuchtigkeit aushärtbare Gemische zu ergeben.

Es wurde gefunden, daß ein Gemisch, das neben üblichen Hilfs- und Zusatzmitteln

a) mindestens ein organisches Polyisocyanat oder ein Polyepoxid und

b) als feuchtigkeitsaktivierbaren Härter ein N,N'-substituiertes Imidazolidinderivat oder ein N,N'-substituiertes Hexahydropyrimidinderivat der allgemeinen Formel

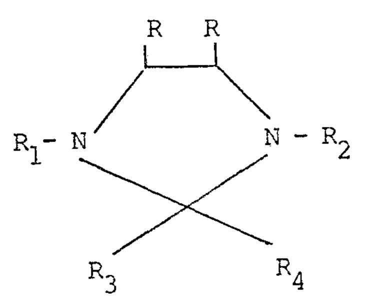

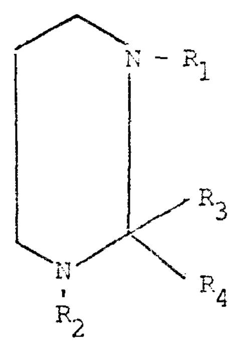

enthält, worin $R_1$ ein H-Atom, einen Hydroxyalkyl- oder Alkylrest mit 1-12 C-Atomen, $R_2$ einen Alkylrest mit 1-12 C-Atomen, $—CO—R_5$, $—CH_2—CH_2—COOR_5$, $—CH_2—CH_2—\underset{R_5NR_5}{\underset{|}{C}}=O$ oder $—CH_2—CH_2—CN$ oder $R_1$ und $R_2$ $—CH_2—CH_2—COOR_5$, $—CH_2—CH_2—\underset{R_5NR_5}{\underset{|}{C}}=O$, worin $R_5$ eine Alkylgruppe bis zu 8 C-Atomen bedeutet, oder $—CH_2—CH_2—CN$ darstellt, $R_3$ ein Wasserstoffatom oder einen Alkylrest mit 1 bis 5 C-Atomen und $R_4$ ein Wasserstoffatom oder einen Alkylrest mit 1 bis 5 C-Atomen oder $R_3$ und $R_4$ einen einzigen Alkylenrest von 4 bis 6 C-Atomen und R ein H-Atom oder einen Alkylrest mit 1 bis 4 C-Atomen bedeuten, und worin das Verhältnis der Moläquivalente von Isocyanat oder Epoxid zum Härter 1 : 10 bis 10 : 1 beträgt in Gegenwart von Luftfeuchtigkeit aushärtet und zähe, vielseitig verwendbare, polymere Materialien ergibt. Die in Rede stehenden Verbindungen enthalten an keinem N-Atom eine —CO—NH—Gruppierung und werden in Mengen eingesetzt, die eine chemische Härtung gewährleisten und daher erheblich über den Mengen liegen, die bei katalytischen Anwendungen dieser Verbindungen als Aufbaukatalysatoren erforderlich sind (vgl. z. B. DT-OS 2 044 719). Viele dieser Gemische lassen sich in Abwesenheit von

Feuchtigkeit ohne eine nennenswerte Reaktion zwischen den erfindungsgemäß verwendeten Härtern und dem zu härtenden Polyisocyanat oder Polyepoxid lagern.

Eine Gruppe der erfindungsgemäßen Gemische ist dadurch gekennzeichnet, daß es als N,N'-substituiertes Imidazolidinderivat ein Imidazolidin der allgemeinen Formel

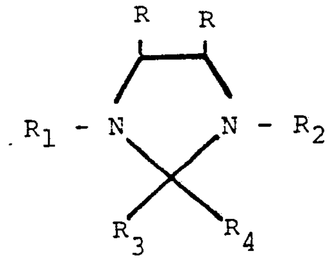

enthält, worin $R_1$ ein H-Atom, einen Hydroxyalkyl- oder Alkylrest mit 1-12 C-Atomen, $R_2$ einen Alkylrest mit 1-12 C-Atomen, oder $R_1$ und $R_2$ $—CH_2—CH_2—COOR_5$, $—CH_2—CH_2—\underset{R_5NR_5}{\underset{|}{C}}=O$, worin $R_5$ eine Alkylgruppe bis zu 8 C-Atomen darstellt, und $—CH_2—CH_2—CN$, $R_3$ ein Wasserstoffatom oder einen Alkylrest mit 1 bis 5 C-Atomen und $R_4$ ein Wasserstoffatom oder einen Alkylrest mit 1 bis 5 C-Atomen oder $R_3$ und $R_4$ einen einzigen Alkylenrest von 4 bis 6 C-Atomen und R ein H-Atom oder einen Alkylrest mit 1 bis 4 C-Atomen bedeuten. Diese Verbindungen lassen sich z. B. durch Cyclisierung von sekundären Äthylendiaminen mit den entsprechenden Carbonylverbindungen, also Aldehyden oder Ketonen der vorgegebenen Konstitution, wie Formaldehyd oder Cyclohexanon, herstellen.

Als Beispiele derartiger Imidazolidine seien genannt: 2-Pentamethylen-N,N'-dimethylimidazolidin-1,3, N,N'-Dimethylimidazolidin; N,N'-Di-n-butylimidazolidin; N,N'-Di-i-propylimidazolidin; N,N'-Bis-dodecylimidazolidin.

Eine weitere Gruppe der erfindungsgemäßen Imidazolidinderivate ist dadurch gekennzeichnet, daß im obigen Formelbild $R_1$ und $R_2$ $—CH_2—CH_2—COOR_5$, $—CH_2—CH_2—\underset{R_5NR_5}{\underset{|}{C}}=O$, worin $R_5$ eine Alkylgruppe bis zu 8 C-Atomen darstellt, und $—CH_2—CH_2—CN$ bedeuten. Hierbei kann $R_1$ auch ein H-Atom, ein Hydroxylalkylrest oder ein Alkylrest mit 1 bis 12 C-Atomen sein.

Als Beispiele derartiger Imidazolidine seien genannt: N,N'-Diäthyl-β-dicarbäthoxyimidazolidin-1,3, N,N'-Diäthyl-β-dicyano-imidazolidin, 2-Pentamethylen-N,N'-diäthyl-β-dicyano-imidazolidin, N-β-Hyroxyäthyl-N'-β-cyanoäthylimidazolidin; N,N'-Diäthyl-β-dicyano-5-methylimidazolidin.

Die Herstellung der erwähnten Imidazolidinderivate kann z. B. durch Addition der entsprechenden, sekundäre N-Atome aufweisenden Imidazolidine an die konstitutionsmäßig vorgegebenen Verbindungen mit aktivierten C = C-Doppelbindungen erfolgen. Desweiteren ist es möglich, Äthylendiamin an eine entsprechende Verbindung mit aktivierten C = C-Doppelbindungen, wie Acrylnitril, N,N-Dialkylacrylamid, Acrylsäureester, zu addieren, um danach eine Cyclisierung des Reaktionsproduktes mit der entsprechenden Carbonylverbindung durchzuführen.

Mit Imidazolidin- und Hexahydropyrimidingruppierungen lassen sich auch Oligomere herstellen. So kann man z. B. die primären Diamine Äthylendiamin und Propylendiamin an Alkandioldiacrylate addieren und die entstandenen Reaktionsprodukte anschließend durch Umsetzung mit Aldehyden und Ketonen cyclisieren. Die erfindungsgemäßen Gemische dieser Art sind dadurch gekennzeichnet, daß sie als Härter Bisacrylat-Imidazolidin-Oligomere oder Bisacrylat-Hexahydropyrimidin-Oligomere mit einem Molekulargewicht von ca. 400 bis 1 500 enthalten, die durch Addition von primären Diaminen mit 2 bis 3 C-Atomen an Alkandioldiacrylate und anschließende Cyclisierung mit Aldehyden und Ketonen von 1 bis 9 C-Atomen erhalten worden sind. Derartige Oligomere erhält man zum Beispiel, wenn man Äthylendiamin oder Propylendiamin an Butandioldiacrylat addiert und anschließend die entstandenen Reaktionsprodukte mit Carbonylverbindungen, wie Formaldehyd, cyclisiert.

Weitere erfindungsgemäße Gemische sind dadurch gekennzeichnet, daß sie ein substituiertes Hexahydropyrimidinderivat der allgemeinen Formel

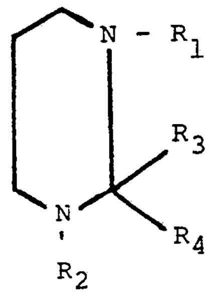

enthalten, worin $R_1$ ein H-Atom, einen Hydroxyalkylrest oder Alkylrest mit 1 bis 12 C-Atomen, $R_2$ einen Alkylrest mit 1-12 C-Atomen, oder $R_1$ und $R_2$ $-CH_2-CH_2-COOR_5$, $-CH_2-CH_2-\underset{R_5NR_5}{\underset{|}{C}}=O$, worin $R_5$ eine Alkylgruppe bis zu 8 C-Atomen darstellt, und $-CH_2-CH_2-CN$, $R_3$ ein Wasserstoffatom oder einen Alkylrest mit 1-5 C-Atomen und $R_4$ ein Wasserstoffatom oder einen Alkylrest mit 1-5 C-Atomen oder $R_3$ und $R_4$ einen einzigen Alkylenrest von 4-6 C-Atomen bedeuten. Als Beispiele derartiger Hexahydropyrimidinderivate seien genannt: 2-Pentamethylen-N,N'-dimethyl-hexahydropyrimidin, N,N'-Dibutyl-hexahydropyrimidin, N,N'-Bisdodecyl-hexahydropyrimidin, 2,2-Dimethyl-N,N'-dibutylhexahydropyrimidin.

Sie lassen sich ähnlich wie im Falle der Herstellung der obigen Imidazolidinderivate z. B. durch Cyclisierung von sekundären Propylendiaminen mit den entsprechenden konstitutionsmäßig vorgegebenen Carbonylverbindungen herstellen.

Ferner sind erfindungsgemäß solche Hexahydropyrimidinderivate sehr gut geeignet, für die im obigen Formelbild $R_1$ und $R_2$ $-CH_2-CH_2-COOR_5$, $-CH_2-CH_2-CN$ und $-CH_2-CH_2-\underset{R_5NR_5}{\underset{|}{C}}=O$ bedeuten, worin $R_5$ eine Alkylgruppe bis zu 8 C-Atomen darstellt. Ferner kann $R_1$ ein H-Atom, einen Hydroxyalkyl- oder einen Alkylrest mit 1 bis 12 C-Atomen bedeuten. Als Beispiele derartiger Hexahydropyrimidine seien genannt:

N,N'-Di-β-cyanoäthyl-hexahydropyrimidin,
N,N'-Di-β-carbäthoxyäthyl-hexahydropyrimidin,
N,N'-Bis(propionsäurediäthylamido)-hexahydropyrimidin.

Die Herstellung der erwähnten Hexahydropyrimidinderivate kann z. B. wieder analog der Herstellung der obigen Imidazolidinderivate durch Addition der entsprechenden, sekundäre N-Atome aufweisenden Hexahydropyrimidine an die konstitutionsmäßig vorgegebenen Verbindungen mit aktivierten C = C-Doppelbindungen erfolgen. Desweiteren ist es möglich, Propylendiamin an eine entsprechende Verbindung mit aktivierten C = C-Doppelbindungen, wie Acrylnitril, N,N-Dialkylacrylamid und Acrylester, zu addieren und danach eine Cyclisierung des Reaktionsproduktes mit der entsprechenden, konstitutionsmäßig vorgegebenen Carbonylverbindung durchzuführen.

Eine große Vielzahl von polyfunktionellen Isocyanaten, d. h. Isocyanaten, die zumindest zwei —NCO-Gruppen aufweisen, ist für die erfindungsgemäßen Gemische verwendbar. Paktisch läßt sich jedes Isocyanat mit zwei oder mehr NCO-Gruppen, die in Gegenwart von Feuchtigkeit mit den erfindungsgemäß verwendeten N,N'-substituierten Imidazolidinderivaten oder Hexahydropyrimidinderivaten in Reaktion treten, verwenden. Eingeschlossen sind hierin auch die üblichen und bekannten NCO-Präpolymeren mit einem Molekulargewicht von etwa 500 bis 10 000, vorzugsweise von 2 000-5 000.

Zu den bei den erfindungsgemäßen Gemischen verwendbaren Polyisocyanaten gehören beispielsweise die aliphatischen Isocyanate, wie z. B. 1,6-Hexamethylendiisocyanat, 1,8-Octamethylendiisocyanat, 1,12-Dodecamethylendiisocyanat, 2,24-Trimethylhexamethylendiisocyanat, und ähnliche Alkylendiisocyanate, 3,3'-Diisocyanatdipropyläther, 3-Isocyanatmethyl-3,5,5-trimethylcyclohexylisocyanat, Cyclopentylen-1,3-diisocyanat, Cyclohexylen-1,4-diisocyanat, Methyl-2,6-diisocyanatcaproat und verwandte Isocyanate, Bis -(2-Isocyanatäthyl)-fumarat, 4-Methyl-1,3-diisocyanatcyclohexan, trans-Vinylendiisocyanat und ähnliche ungesättigte Isocyanate, 4,4'-Methylen-bis (isocyanatcyclohexan) und verwandte Isocyanate, Menthandiisocyanat, N,N',N''-tris-(6-Isocyanathexamethylen)-biuret und verwandte Isocyanate, Bis-(2-Isocyanatäthyl)-carbonat und ähnliche Carbonatdiisocyanate sowie andere bekannte aus aliphatischen Polyaminen abgeleitete Isocyanate, aromatische Isocyanate, wie z. B. Toluylendiisocyanate, Xylylendiisocyanate, Dianisidindiisocyanat, 4,4'-Diphenylmethandiisocyanat, 1-Äthoxy-2,4-diisocyanatbenzol, 1-Chlor-2,4-diisocyanatbenzol, Tris-(4-Isocyanatphenyl)-methan, Naphthalindiisocyanate, Fluorendiisocyanate, 4,4'-Biphenyldiisocyanat; Phenylendiisocyanate, 3,3'-Dimethyl-4,4'-biphenyldiisocyanat, p-Isocyanatbenzylisocyanat, Tetrachlor-1,3-phenylendiisocyanat und verwandte Isocyanate, 2,4-6-Tribrom-1,3-phenylendiisocyanat, Bis-(2-Isocyanatäthyl)-benzol, Vinylpolymere, welche beispielsweise Isocyanatäthylmethacrylat oder -acrylat als Monomeres oder Comonomeres enthalten, Präpolymere von Polyisocyanaten mit Polyhydroxyl- oder Polyamin-Verbindungen, wie z. B. die Präpolymeren von 3-Isocyanatmethyl-3,3,5-trimethylcyclohexylisocyanat, Toluylendiisocyanat, Methandiisocyanat, 4,4'-Methylen-bis-(cyclohexylisocyanat), 4,4'-Methylen-bis-(isocyanatcyclohexan), 2-Isocyanatäthyl-6-isocyanatcaproat und dgl. mit Polyätherpolyolen, Polyesterpolyolen und dgl.

Als in den erfindungsgemäßen Gemischen verwendbare Polyepoxide eignen sich grundsätzlich alle die Polyepoxide, die sich mit Aminen härten lassen. Beispiele dafür sind insbesondere die Glycidyläther von Bisphenol A, Phenylglycidyläther-Derivate, Tetrahydro- und Hexahydrophthalsäure-diglycidylester.

Die erfindungsgemäßen Gemische sind bei Abwesenheit von Feuchtigkeit reaktionsträge und relativ stabil. Kommen die Gemische jedoch mit Feuchtigkeit in Berührung, härten sie zu zähen, festen polymeren Materialien. Ein Vorteil der Gemische besteht darin, daß die Reaktion nicht so schnell verläuft, daß ihre Verarbeitung in zu kurzer Zeit erfolgen muß.

Die Reaktion zwischen den erfindungsgemäß verwendeten Härtern und dem Polyisocyanat- bzw.

Polyepoxid-Bestandteil wird im allgemeinen durch atmosphärische Feuchtigkeit bewirkt. Obgleich die Hydrolyse der Härter, die die Abspaltung von reaktionsfähigen sekundären Diaminen bewirkt, und die sich daran anschließende Polyaddition auch bei Raumtemperatur eintritt, können erhöhte Temperaturen die Reaktion und Härtung begünstigen. Im allgemeinen sind hierfür Temperaturen bis 60 °C vollkommen ausreichend.

Mit den erfindungsgemäßen Gemischen können somit Polyisocyanat-Polyadditionsprodukte oder vernetzte Epoxiharze in Gegenwart von Luftfeuchtigkeit hergestellt werden.

Mit den erfindungsgemäßen Mischungen bzw. dem erfindungsgemäßen Verfahren kann man Lacke, nahtlose Bodenbeläge, Fugenvergußmassen, Dichtungen, Klebstoffe für natürliche und synthetische Materialien u. a. herstellen. Die erfindungsgemäßen Gemische sind mit oder ohne Lösungsmittel verwendbar. Als Lösungsmittel eignen sich insbesondere aromatische Lösungsmittel wie Toluol, Xylol, Ester wie Äthylglykolacetat, Butylacetat und Ketone wie Methyläthylketon, Methylisobutylketon.

Das Verhältnis der Moläquivalente von Isocyanat oder Epoxid zu den erfindungsgemäß verwendeten Härtern kann in den Grenzen von 1 : 10 bis 10 : 1 variieren. Man kann hierdurch auch die Art und Eigenschaften der sich ergebenden Materialien beeinflussen. Das Verhältnis der Moläquivalente von Isocyanat zum Härter beträgt bei den erfindungsgemäßen Gemischen vorzugsweise 1 : 1,1 bis etwa 2,5 : 1. Das Verhältnis der Moläquivalente von Glycidylgruppen zu den erfindungsgemäß verwendeten Härter beträgt vorzugsweise 1 : 1 bis etwa 2 : 1. Die Härtungsreaktion verläuft vorteilhaft bei Zugabe üblicher Katalysatoren, z. B. Phenol.

Die erfindungsgemäßen Gemische können selbstverständlich die üblich verwendeten Hilfs- und Zusatzmittel enthalten. Als solche kommen z. B. Pigmente, Antiabsetzmittel, Verlaufsmittel und Füllstoffe, wie Schwerspat, Kreidepulver, Talkum, in Betracht.

## Beispiel 1

Herstellung von 2-Pentamethylen-N,N'-dimethylimidazolidin-1,3 durch Cyclisierung von N,N'-Dimethyläthylendiamin mit Cyclohexanon.

In einen 2-Halskolben, versehen mit Rührer, Aufsatz zur Wasserabscheidung mit Rückflußkühler und Trockenrohr, wurden 400 ml Benzol, 83 g (0,94 Mol) N,N'-Dimethyläthylendiamin und 92,4 g (0,94 Mol) Cyclohexanon gegeben. Die Reaktionsmischung wird unter Rückfluß erhitzt, wobei das Wasser als Azeotrop abdestillierte und im Wasserabscheider nach Abtrennung von Benzol gesammelt und abgelassen wurde. Nach etwa 3 Stunden war die Wasserabscheidung beendet. Aus dem Kolbeninhalt wurde das Benzol abdestilliert und anschließend das Reaktionsprodukt durch zweimalige fraktionierte Destillation im Vakuum rein gewonnen. Kp : 330 °K/399 Pa.

Die Ausbeute an 2-Pentamethylen-N,N'-dimethylimidazolidin-1,3 beträgt ca. 50 %.

Elementaranalyse errechnet für $C_{10}H_{20}N_2$ :

C 71,5 H 11,9 N 16,6.

C 70,4 H 12,0 N 17,0.

## Beispiel 2

Herstellung von N,N'-Diäthyl-β-dicarbäthoxy-imidazolidin-1,3 durch Addition von Äthylendiamin an Acrylsäureäthylester und anschließende Cyclisierung mit Paraformaldehyd.

In einen 3-Halskolben mit Rührer, Tropftrichter, Aufsatz für Wasserabscheidung und Rückflußkühler mit Trockenrohr wurden 33,5 ml (0,5 Mol) Äthylendiamin und 200 ml Toluol gegeben. Die Lösung wurde auf 273 °K abgekühlt, danach wurden 108 ml (1 Mol) Acrylsäureäthylester langsam bei 273-278 °K zugetropft. Die Kühlung wurde nun abgesetzt und die Temperatur des Kolbeninhalts stieg nach etwa einer Stunde auf Raumtemperatur an. Bei Raumtemperatur wurde noch 3 Stunden gerührt ; danach wurden 15 g (0,5 Mol) Paraformalaldehyd zugesetzt und die Reaktionsmischung unter Rückflüß erhitzt. In 1,5-2 Stunden wurde die berechnete Wassermenge durch azeotrope Destillation abgeschieden.

Zunächst wurde im Rotationsverdampfer die Reaktionslösung vom Toluol befreit. Nach der Reinigung im Hochvakuum beträgt die Ausbeute ca. 90 %. Anschließend folgte eine zweimalige fraktionierte Destillation des Reaktionsproduktes im Hochvakuum.

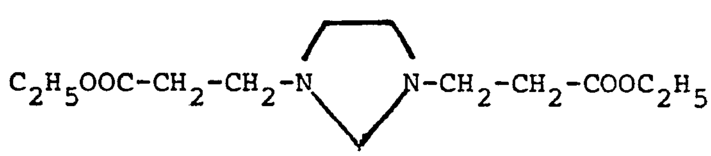

N,N'-Diäthyl-β-dicarbäthoxy-imidazolidin-1,3 siedete bei 403 °K/13 Pa. Die Ausbeute betrug 60 %.

Elementaranalyse für $C_{13}H_{24}N_{28}$.

berechnet : C 57,4 H 8,8 N 10,3.

gefunden : C 56,9 H 9,2 N 11,0.

Beispiel 3

Herstellung von 2-Pentamethylen-N,N'-diäthyl-β-carbäthoxyimidazolidin durch Addition von 2-Pentamethylen-1,3-imidazolidin an Acrylsäureäthylester.

In einem Zweihalskolben mit Rührer und Kühler mit Trockenrohr werden 200 ml wasserfreies Methanol, 100 g (1 Mol) Acrylsäureäthylester, stabilisiert mit 100 ppm Hydrochinon, und 30 g (0,5 Mol) 2-Pentamethylen-1,3-imidazolidin gegeben. Die Reaktionslösung wird bei Zimmertemperatur 48 Stunden gerührt. Anschließend wird das Methanol und Reste des nichtumgesetzten Ausgangsmaterials im Rotationsverdampfer unter Hochvakuum abdestilliert.

Die Ausbeute des erhaltenen 2-Pentamethylen-N,N'-diäthyl-β-carbäthoxyimidazolidin betrug 93 %.

Elementaranalyse für $C_{18}H_{24}N_2$.

berechnet : C 63,5 H 9,4 N 8,2.

gefunden : C 63,9 H 9,8 N 8,8.

Beispiel 4, 5 und 6

Herstellung von N,N'-Diäthyl-β-dicyano-imidazolidin und N,N'-Diäthyl-β-dicyano-hexahydropyrimidin durch Addition von Äthylendiamin bzw. 1,3-Diaminopropan an Acrylnitril und anschließende Cyclisierung mit Paraformaldehyd.

Zu einer Lösung von 60,1 g (1 Mol) Äthylendiamin in 300 ml Methanol wurden in Stickstoffatmosphäre mit Hydrochinon stabilisiertes Acrylnitril bei 273-278 °K zugetropft. Die köhlung wurde weggenommen und der Kolbeninhalt bei Zimmertemperatur über Nacht gerührt. Nach dem Abdestillieren des Methanols wurde das Additionsprodukt mit 500 ml Toluol und 15,85 g Paraformaldehyd versetzt und unter Rückfluß erhitzt. Das durch Cyclisierung freiwerdende Wasser wurde dabei azeotrop entfernt. Nach Evaporation des Lösungsmittels im Hochvakuum wurde N,N'-Diäthyl-β-dicyanoimidazolin in 92 %-iger Ausbeute erhalten.

Elementaranalyse für $C_9H_{14}N_4$.

berechnet : C 61,1 H 7,9 N 31,4.

gefunden : C 61,1 H 8,1 N 31,7.

Mit 1,3-Diaminopropan anstelle von Äthylendiamin konnte nach diesem Verfahren N,N'-Diäthyl-β-dicyanohexahydropyrimidin in > 90 %-iger Ausbeute erhalten werden.

Mit 1,2-Diaminopropan anstelle von Äthylendiamin konnte nach obigem Verfahren N,N'-Diäthyl-β-dicyano-5-methylimidazolidin erhalten werden. Die Ausbeute betrug 90 %.

Beispiel 7

Herstellung von N,N'-Dibutyl-hexahydropyrimidin.

N,N'-Dibutylaminopropan wurde durch Umsetzung von einem Mol Dibrompropan mit 5 Mol Butylamin (analog nach Hofmann J. pr. Chem. 1859, 388) hergestellt. Kp 65-67 °C/0,1 mm. Die Ausbeute betrug 51 %.

In einem Kolben, versehen mit Wasserabscheider und Rückflußkühler, wurden 0,1 Mol N,N'-Dibutylaminopropan mit einem 10 %-igen molaren Überschuß an Paraformaldehyd in 150 ml Toluol unter Sieden am Rückfluß umgesetzt.

Das bei der Cyclisierungsreaktion freiwerdende Wasser wurde azeotrop aus dem Kolbeninhalt entfernt und im Wasserabscheider gesammelt. Nach 4 Stunden waren 98 % der Theorie Wasser abgespalten. Nach dem Abdestillieren des Toluols wurde die Substanz im Hochvakuum durch Destillation gereinigt.

Ausbeute : 88 %.

Elementaranalyse für $C_{12}H_{26}N_2$.

berechnet : C 72,7 H 13,1 N 14,1.

gefunden : C 71,8 H 13,1 N 14,0.

Beispiel 8

Herstellung von N,N'-Bis(propionsäurediäthylamido)-imidazolidin durch Addition von Äthylendiamin an Acrylsäurediäthylamid und anschließende Cyclisierung mit Formaldehyd.

Acrylsäurediäthylamid wurde analog H.R. Snyder und R.E. Putnam, J. Am. Soc. Vol. 76 (1954) 34 aus Diäthylamin und Acrylsäurechlorid in Benzol hergestellt. Kp 96 °C/10 mm.

In einem 250 ml Dreihalskolben mit Tropfrichter, Rührer und Thermometer wurden 2,6 g (43,3 mM) Äthylendiamin, gelöst in 100 ml Toluol, vorgelegt und auf 0 °C abgekühlt. Dazu wurden 11 g (86,6 mM) Acrylsäurediäthylamid, gelöst in 50 ml Toluol, langsam zugetropft. Nach einer Stunde wurde die Kühlung

weggenommen und bei Raumtemperatur über Nacht weitergerührt. Nach einer Rührzeit von 16 Stunden wurden zu dem Ansatz 1,36 g Paraformaldehyd gegeben und durch Kochen am Rückfluß die Verbindung cyclisiert. Das abgespaltene Wasser wurde azeotrop aus dem Reaktionsgefäß entfernt. Nach Beendigung der Cyclisierung wurde das Toluol abdestilliert und der gelbe flüssige Rückstand wurde im Hochvakuum gereinigt.

Ausbeute ca. 40 %.

Elementaranalyse für $C_{17}H_{34}N_4O_2$.

berechnet : C 62,8 H 10,43 N 17,18.

gefunden : C 62,2 H 10,6 N 18,0.

Beispiel 9

Herstellung von 1-β-Hydroxyäthyl-3-β-cyanoäthyl-imidazolidin.

In einem Zweihalskolben mit Rührer, Wasserabscheider und Rückflußkühler wurden in 300 ml Toluol 104,2 g (1 Mol) Aminoäthyläthanolamin und 30 g Paraformaldehyd gelöst und unter Rückfluß gekocht. Nach 3 Stunden waren die berechneten Mengen Wasser ausgekreist. Das Toluol wurde durch Destillation entfernt und das N-Hydroxyäthyl-imidazolidin im Vakuum destilliert. Kp. 70 °C/0,1 mm.

Ausbeute : ca. 80 %.

0,5 Mol N-Hydroxyäthyl-imidazolidin wurden auf 0-3 °C abgekühlt und 0,5 Mol Acrylnitril zugetropft. Nach Beendigung des Zutropfens wurde die Kühlung abgeschaltet und der Kolbeninhalt 20 Std. noch bei Raumtemperatur gerührt. Die erhaltene Verbindung 1-β-Hydroxyäthyl-3-β-cyanoäthylimidazolidin wurde im Hochvakuum von Verunreinigungen befreit.

Ausbeute : 90 % d. Th.

Elementaranalyse für :

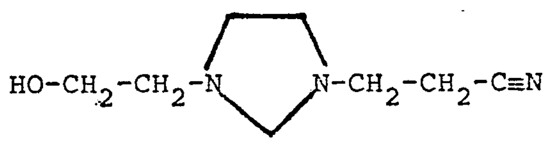

berechnet : C 56,80 H 8,88 N 24,85.

gefunden : C 57,0 H 9,2 N 25,7.

Das aufgenommene IR-Spektrum zeigte bei 3 200-3 600 $cm^{-1}$ die Absorption der OH-Gruppe und bei 2 200 $cm^{-1}$ die C≡N-Absorptionsbande.

Beispiel 10

Herstellung von N,N'-Bisdodecylimidazolidin.

1,5 Mol Dodecylamin wurden aufgeschmolzen und bei 30 °C 0,17 Mol 1,2-Dibromäthan zugetropft. Nach dem Abklingen der exothermen Reaktion wurde die Lösung noch 4 Stdn. auf 80 °C erhitzt. Das festgewordene Produkt wurde in Wasser aufgenommen und ausgeäthert.

Das Produkt wurde im Hochvakuum gereinigt.

Ausbeute : 36 %.

30 mMol N,N'-Bis(dodecyl)-äthylendiamin wurden in 100 ml Toluol gelöst und mit 1,2 g Paraformaldehyd versetzt. Durch Erhitzen unter Rückfluß und kontinuierlicher Wasserabscheidung erfolgte die Cyclisierung. Die Reinigung erfolgte im Hochvakuum.

Ausbeute : 92,6 %.

Elementaranalyse für

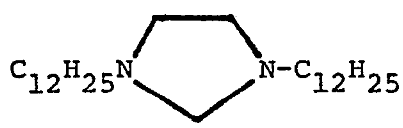

berechnet : C 79,33 H 13,81 N 6,85.

gefunden : C 79,4 H 13,9 N 7,0.

Beispiel 11

Die Herstellung von N,N'-Bisdodecyl-hexahydropyrimidin erfolgte analog dem Beispiel 10, anstelle von 1,2-Dibromäthan wurde 1,3-Dibrompropan verwendet.

Die Ausbeute von N,N'-Bis(dodecyl)-1,3-diaminopropan wurde durch Aussalzung des Äthers mit Kochsalz auf 61 % gesteigert.

Die Ausbeute des N,N'-Bisdodecyl-hexahydropyrimidins betrug 95 %.
Elementaranalyse für

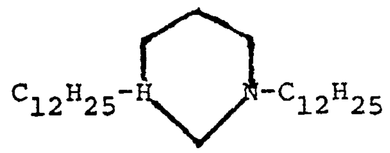

berechnet : C 79,52 H 13,85 N 6,63.
gefunden : C 79,8 H 13,7 N 6,7.

Beispiel 12

Herstellung von 2,2-Dimethyl-N,N'-dibutylhexahydropyrimidin.

In einem Erlenmeyerkolben wurden 0,1 Mol N,N'-Dibutyldiaminopropan und 0,2 Mol wasserfreies Aceton sowie 20 g Molekularsiebe mit 5 Å gegeben und die Mischung mit einem Magnetrührer 48 Stunden bei Raumtemperatur gerührt. Die Molekularsiebe wurden unter Feuchtigkeitsausschluß abgetrennt und das überschüssige Aceton abdestilliert. Das Produkt wurde anschließend durch zweimalige fraktionierte Destillation im Vakuum gereinigt. Ausbeute ca. 40 %, Kp. 82-84 °C bei 0,3 mm.
Elementaranalyse für

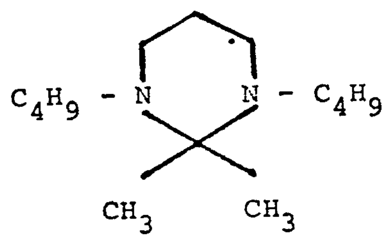

berechnet : C 74,25 H 13,38 N 12,37.
gefunden : C 73,8 H 13,1 N 12,8.

Beispiel 13

Härtung von Polyisocyanaten (Desmodur N) mit Imidazolidin- und Hexahydropyrimidinderivaten.

Die in den Beispielen 1 bis 13 hergestellten viskosflüssigen Imidazolidin- und Hexahydropyrimidinderivate wurden mit 20 % wasserfreiem Methyl-isobutylketon verdünnt. Die Lösungen wurden mit den äquivalenten Mengen einer 75 %-igen Desmodur N-Lösung in Xylol/Äthylglykolacetat 1 : 1 der Firma Bayer AG versetzt und 10 Minuten mit einem Magnetrührer gemischt. Die erhaltenen Lösungen wurden auf gereinigte und entölte Schwarzbleche mit einer Aufziehspirale oder Lackhantel zu einer Schichtdicke von ca. 100 µ verstrichen. Danach wurde vom Auftrag des Lackes an die Trocknungszeit festgestellt, in welcher der erhaltene Lackfilm berührungstrocken (touch dry Zeit) wurde.
Touchdry-Zeiten für Imidazolidinderivate bei Raumtemperatur.

(Siehe Tabelle Seite 9 f.)

| Imidazolidin und Hexahydropyrimidinderivate | Berührungstrocken nach |
|---|---|
| 2-Pentamethylen-N,N'-dimethyl-imidazolidin-1,3 | 2 - 3 min. |
| N,N'-Diäthyl-ß-dicarbäthoxyimidazolidin-1,3 | 15 min. |
| 2-Pentamethylen-N,N'-diäthyl-ß-dicarbäthoxy-imidazolidin-1,3 | 2 - 2 1/2 h |
| N,N'-Diäthyl-ß-dicyanoimidazolidin | 4 h |
| N,N'-Diäthyl-ß-dicyano-hexahydropyrimidin | 4 h |
| N,N'-Diäthyl-ß-dicyano-5-methylimidazolidin | 5 h |
| N,N'-Dibutyl-hexahydropyrimidin | 10 - 15 min. |
| N,N'-Bis(propionsäurediäthylamido)-imidazolidin | 15 - 20 min |
| 1-ß-Hydroxyäthyl-3-ß-cyanoäthyl-imidazolidin | 15 min. |
| N,N'-Bisdodecylimidazolidin | 30 min. |
| N,N'-Bisdodecylhexahydropyrimidin | 40 min. |
| 2,2-Dimethyl-N,N'-dibutylhexahydropyrimidin | 30 min. |

Beispiel 14

Herstellung von Imidazolin-Oligomeren durch Addition von Äthylendiamin an Butandioldiacrylat und anschließende Cyclisierung mit Paraformaldehyd.

In einem 3-Halskolben mit Tropftrichter, Rührer und Kühler mit Blasenzähler wurden 200 ml Methanol und 49,5 g (250 mM) stabilisiertes Butandioldiacrylat gegeben und nach Spülung mit Stickstoff unter Rühren 10 g (167 mM) Äthylendiamin zugetropft. Die Reaktionslösung wurde allmählich zäher ; sie wurde daher mit weiteren 100 ml Methanol verdünnt. Nach 24 Std. wurde das Lösungsmittel im Vakuum bei Raumtemperatur abrotiert. Der Rückstand wurde in einem Kolben mit Rückflußkühler mit Trockenrohr in 400 ml Toluol gelöst, mit 5 g Paraformaldehyd versetzt und zum Sieden erhitzt. Nach etwa 2 Stunden war die azeotrope Auskreisung des Wassers beendet. Das Reaktionsprodukt wurde im Hochvakuum vom Lösungsmittel befreit.

Ausbeute 93 % ; Mol.-Gew. des Oligomeren : ~ 700.

N-Gehalt anal. gef. 6,8 % (errechnet : 7,6 %).

Beispiel 15

In einem 25 ml-Erlenmeyerkölbchen mit Magnetrührer wurden 4,44 g (6 mM) des in Beispiel 4 hergestellten Imidazolidin-Oligomeren in 10 ml wasserfreiem Methyläthylketon gelöst. Der Lösung wurden 5,1 g 75 %-iges Desmodur N (in Xylol/Äthylglykolacetat 1 : 1) hinzugefügt und 10 Min. gerührt. Die Lacklösung wurde auf ausgestanzte, entölte Schwarzbleche mit einer Hantel verstrichen und bei Raumtemperatur stehen gelassen. Der Lackfilm auf dem Schwarzblech war nach 10-15 Min. berührungstrocken. Die Standzeit der Lacklösung betrug über 5 Stunden.

Beispiel 16

Herstellung von Imidazolidin-Oligomeren durch Addition von Äthylendiamin an Hexandioldiacrylat und anschließende Cyclisierung mit Paraformaldehyd.

In einem 3-Halskolben mit Rührer, Tropftrichter, Wasserabscheider und Kühler mit Blasenzähler wurden 250 ml Toluol und 6,0 g (100 mM) Äthylendiamin gegeben und auf 0 °C gekühlt. Nach Spülung mit Stickstoff wurden 45,2 g (200 mM) Hexandioldiacrylat (stabilisiert mit Hydrochinon) bei 0 °C zugetropft. Nach 16-stündigem Rühren bei Raumtemperatur wurde das Reaktionsgemisch mit 3,15 g

Paraformaldehyd versetzt und zum Sieden erhitzt. Nach etwa 2 Stunden war die azeotrope Auskreisung des Wassers beendet. Das Reaktionsprodukt wurde im Hochvakuum vom Lösungsmittel befreit.

Ausbeute : > 90 % Mol.-Gew. des Oligomeren : 520.

N-Gehalt analyt. gef. 5,9 (errechnet 5,3 %).

Mit obiger Verbindung erfolgte die Härtung von Desmodur N (aliph. Polyisocyanat von Bayer AG) nach Beispiel 13. Die Touch-dry-Zeit betrug 10-15 min.

Beispiel 17

Herstellung von Imidazolin-Oligomeren durch Addition von 1,3-Diaminopropan an Neopentylglykoldiacrylat und anschließende Cyclisierung mit Paraformaldehyd.

In einem 3-Halskolben mit Rührer, Tropftrichter, Wasserabscheider und Kühler mit Blasenzähler wurden 250 ml Toluol und 7,4 g (100 mM) 1,3-Diaminopropan gegeben und auf 0 °C gekühlt. Nach Spülung mit Stickstoff wurden 31,8 g (150 mM) Neopentylglykoldiacrylat (stabilisiert mit Hydrochinon) bei 0-5 °C zugetropft. Nach 16-stündigem Rühren bei Raumtemperatur wurde das Reaktionsgemisch mit 3,15 g Paraformaldehyd versetzt und zum Sieden erhitzt. Nach etwa 2 Stunden war die azeotrope Auskreisung des Wassers beendet. Das Reaktionsprodukt wurde im Hochvakuum vom Lösungsmittel befreit.

Ausbeute : 95 % Mol.-Gew. des Oligomeren : ~ 800.

N-Gehalt anal. gef. 6,9 % (errechnet : 7,6 %).

Ein Härtungsversuch mit dieser Verbindung und Desmodur N erfolgte gemäß Beispiel 13. Der Lackfilm war nach 3 Stunden berührungstrocken.

Beispiel 18

Härtung von Polyepoxiden mit Imidazolidin- und Hexahydropyrimidinderivaten

In einem Erlenmeyerkolben mit Magnetrührer wurden bei Raumtemperatur die Epoxyverbindung mit den stöchiometrisch berechneten Härtemengen (Imidazolidin- bzw. Hexahydropyrimidinderivate) unter Zusatz von wasserfreiem Toluol 5-10 Minuten gemischt. Die Lösung wurde mit einem Spiral-Filmziehgerät für 150 µ auf Glasplatten verstrichen. Die Lackfilme wurden unter Luftzutritt bei 60 °C getrocknet. In Abständen von 15 Minuten wurde überprüft, nach welcher Zeit der Film berührungstrocken wurde.

| Epikote-Typ+) | Verdünnung Toluol (%) | Härter | Beschleuniger | Touch dry nach Stdn. bei RT | bei 60 °C |
|---|---|---|---|---|---|
| 828 | | DCI | | | 15 |
| 812 | 20 | IDBA | | | 4 - 4,5 |
| 812 | 22 | DIBDA | | | 6 - 7 |
| 828 | 30 | DIBDA | 1% Phenol | | 4,5 |
| 828 | 20 | IDBA | 2% Benzylalk. | | 4 |
| 1001 | 30 | IDBA | 2% Benzylalk. | 4,5 | 1,25 |
| 1001 | 30 | IDBA | 1% Eisessig | 4,25 | 1,2 |
| 1001 | 20 | DCI | 3% Salicylsre. | 3,5 | 1 |
| 1001 | 10 | " | 1% Phenol | 5,5 | 1,5 |
| 1001 | 20 | " | 3% Benzylalk. | 4 | 1 |

DCI : N,N'-Diäthylcarbäthoxyimidazolidin
IDBA : Oligomeres aus 1 Mol Imidazolidin und 2 Mol Butandiolbisacrylat
DIBDA : Oligomeres aus 2 Mol Imidazolidin und 3 Mol Butandiolbisacrylat

+) Epikote-Typen der Fa. Shell

**Ansprüche**

1. Unter dem Einfluß von Luftfeuchtigkeit ausgehärtet werdendes Gemisch, dadurch gekennzeichnet, daß es neben üblichen Hilfs- und Zusatzmitteln

a) mindestens ein organisches Polyisocyanat oder ein Polyepoxid und

b) als feuchtigkeitsaktivierbaren Härter ein N,N'-substituiertes Imidazolidinderivat oder ein N,N'-substituiertes Hexahydropyrimidinderivat der allgemeinen Formel

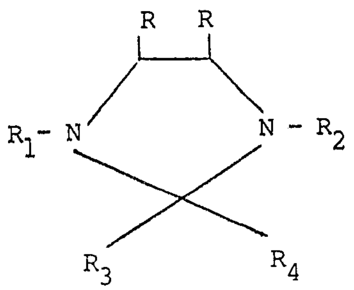

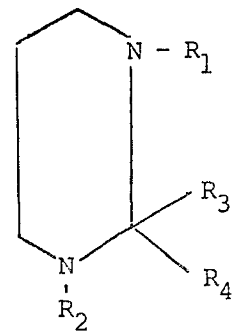

enthält, worin $R_1$ ein H-Atom, einen Hydroxyalkyl- oder Alkylrest mit 1-12 C-Atomen, $R_2$ einen Alkylrest mit 1-12 C-Atomen, $-CO-R_5$, $-CH_2-CH_2-COOR_5$, $-CH_2-CH_2-\underset{R_5NR_5}{C}=O$ oder $-CH_2-CH_2-CN$ oder $R_1$ und $R_2$ $-CH_2-CH_2-COOR_5$ $-CH_2-CH_2-\underset{R_5NR_5}{C}=O$, worin $R_5$ eine Alkylgruppe bis zu 8 C-Atomen bedeutet, oder $-CH_2-CH_2-CN$ darstellt, $R_3$ ein Wasserstoffatom oder einen Alkylrest mit 1 bis 5 C-Atomen und $R_4$ ein Wasserstoffatom oder einen Alkylrest mit 1 bis 5 C-Atomen oder $R_3$ und $R_4$ einen einzigen Alkylenrest von 4 bis 6 C-Atomen und R ein H-Atom oder einen Alkylrest mit 1 bis 4 C-Atomen bedeuten und in ihm das Verhältnis der Moläquivalente von Isocyanat oder Epoxid zum Härter 1 : 10 bis 10 : 1 beträgt.

2. Gemisch nach Anspruch 1, dadurch gekennzeichnet, daß es als Härter Bisacrylat-Imidazolidin-Oligomere oder Bisacrylat-Hexahydropyrimidin-Oligomere mit einem Molekulargewicht von etwa 400 bis 1 500 enthält, die durch Addition von primären Diaminen mit 2 bis 3 C-Atomen an Alkandioldiacrylate und anschließende Cyclisierung mit Aldehyden oder Ketonen von 1-9 C-Atomen erhalten worden sind.

3. Gemisch nach den Ansprüchen 1 bis 2, dadurch gekennzeichnet, daß das Verhältnis der Moläquivalente von Isocyanat zum Härter 1 : 1,1 bis 2,5 : 1 beträgt.

**Claims**

1. A mixture hardening under the effect of atmospheric moisture, characterized in that, in addition to the usual auxiliaries and additives, it contains

a) at least one organic polyisocyanate or a polyepoxide and

b) as moisture-activatable hardener an N,N'-substituted imidazolidine derivative or an N,N'-substituted hexahydropyrimidine derivative corresponding to the following general formula

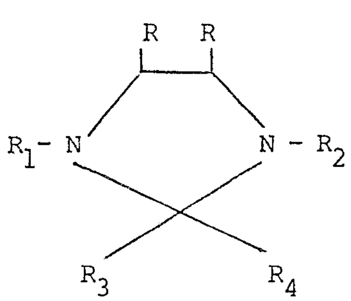

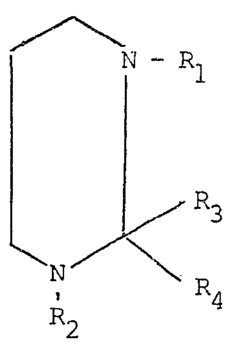

in which $R_1$ represents an H-atom, a hydroxyalkyl or alkyl radical containing from 1 to 12 C-atoms, $R_2$ represents an alkyl radical containing from 1 to 12 C-atoms, $-CO-R_5$, $-CH_2-CH_2-COOR_5$,

$-CH_2-CH_2-\underset{\substack{|\\ R_5NR_5}}{C}=O$ or $-CH_2-CH_2-CN$ or $R_1$ and $R_2$ represent $-CH_2-CH_2-COOR_5$, $-CH_2-CH_2-\underset{\substack{|\\ R_5NR_5}}{C}=O$, where $R_5$ is an alkyl group containing up to 8 C-atoms, or $-CH_2-CH_2-CN$, $R_3$ represents a hydrogen atom or an alkyl radical containing from 1 to 5 C-atoms and $R_4$ represents a hydrogen atom or an alkyl radical containing from 1 to 5 C-atoms or $R_3$ and $R_4$ represent a single alkylene radical containing from 4 to 6 C-atoms and R represents an H-atom or an alkyl radical containing from 1 to 4 C-atoms and the ratio therein of the mole equivalents of isocyanate or epoxide to the hardener amounts to between 1 : 10 and 10 : 1.

2. A mixture as claimed in Claim 1, characterized in that it contains as hardener bis-acrylate-imidazolidine oligomers or bis-acrylate hexahydropyrimidine oligomers having a molecular weight of from about 400 to 15,000 which have been obtained by the addition of primary diamines containing from 2 to 3 C-atoms onto alkane diol diacrylates, followed by cyclisation with aldehydes or ketones containing from 1 to 9 C-atoms.

3. A mixture as claimed in Claims 1 and 2, characterized in that the ratio of the mole equivalents of isocyanate to the hardener amounts to between 1 : 1.1 and 2.5 : 1.

**Revendications**

1. Mélange durcissant sous l'influence de l'humidité de l'air, caractérisé par le fait qu'il contient en plus des auxiliaires et des additifs usuels

a) au moins un polyisocyanate organique ou un polyépoxyde et

b) comme durcisseur pouvant être activé par l'humidité, un dérivé d'imidazolidine N,N'-substitué ou un dérivé d'hexahydropyrimidine N,N'-substitué ayant les formules générales

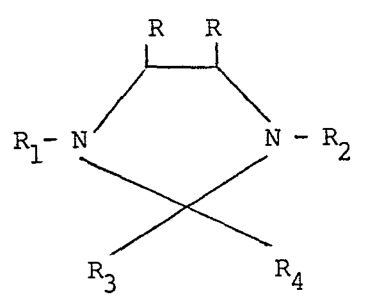

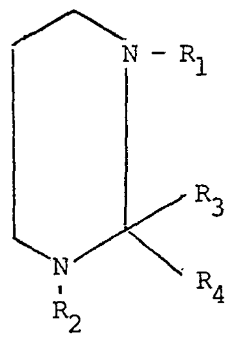

dans lequelles $R_1$ est un atome d'hydrogène, un reste hydroxyalkyle ou un reste alkyle ayant 1 à 12 atomes de carbone; $R_2$ est un reste alkyle ayant 1 à 12 atomes de carbone, $-CO-R_5$, $-CH_2-CH_2-COOR_5$, $-CH_2-CH_2-\underset{\substack{|\\ R_5NR_5}}{C}=O$ ou $-CH_2-CH_2-CN$, ou bien $R_1$ et $R_2$ désignent $-CH_2-CH_2-COOR_5$, $-CH_2-CH_2-\underset{\substack{|\\ R_5NR_5}}{C}=O$, dans lesquelles $R_5$ est un groupe alkyle ayant jusqu'à 8 atomes de carbone, ou représente $-CH_2-CH_2-CN$ ; $R_3$ est un atome d'hydrogène ou un reste alkyle ayant 1 à 5 atomes de carbone, et $R_4$ est un atome d'hydrogène ou un reste alkyle ayant 1 à 5 atomes de carbone, ou bien $R_3$ et $R_4$ représentent un seul reste alkylène ayant 4 à 6 atomes de carbone, et R est un atome d'hydrogène ou un reste alkyle ayant 1 à 4 atomes de carbone, et dans lequel le rapport des équivalents molaires de l'isocyanate ou de l'époxyde au durcisseur est de 1 : 10 à 10 : 1.

2. Mélange selon la revendication 1, caractérisé par le fait qu'il contient comme durcisseur, des oligomères de bisacrylate-imidazolidine ou des oligomères de bisacrylate-hexahydropyrimidine ayant un poids moléculaire d'environ 400 à 1 500, qui sont obtenus par addition de diamines primaires ayant 2 à 3 atomes de carbone sur des diacrylates d'alcanediols et cyclisation avec des aldéhydes ou des cétones ayant de 1 à 9 atomes de carbone.

3. Mélange selon les revendications 1 et 2, caractérisé par le fait que le rapport des équivalents molaires de l'isocyanate au durcisseur est de 1 : 1,1 à 2,5 : 1.